# EUROPEAN PATENT APPLICATION

(11) **EP 2 287 583 A1**
(43) Date of publication of application: **23.02.2011**
(21) Application number: 09168043.9
(22) Date of filing: 18.08.2009
(51) Int. Cl.: G01K 1/08, G01K 1/14, D06F 58/20, F22B 1/28

(54) **Sensor for Measuring a Temperature of a Heater in a Laundry Appliance, and Steam Generator**

(71) Applicant: BSH Bosch und Siemens Hausgeräte GmbH, 81739 München (DE)
(72) Inventor: Kaczmarek, Tomasz, 93-236, Lodz (PL)

(57) **Abstract**

According to the present invention, a sensor 16 is intended for measuring a temperature of a heater 13 of a steam generator 4 in a laundry appliance (1), wherein the sensor 16 is a NTC sensor 16 which is mounted on an outer surface of the heater 13. The inventive steam generator 4 comprises a heater 13 and at least one inventive sensor 16.

## Description

The invention relates to a sensor for measuring a temperature of a heater of a steam generator in a laundry appliance. The invention also relates to a steam generator comprising at least one such sensor.

WO 1996/032607 A1 relates to a steam generator, in particular to generate steam for housework, and concerns a method and a device for automatically carrying out a replenishment of a tank of the steam generator during normal operation thereof. In particular, it is disclosed that by means of a temperature detector, a temperature is measured inside a cell box which is in communication with the tank. When the level of liquid, e.g. water, inside the cell box reaches a minimum level, the temperature detector is surrounded by steam, the temperature of which is higher with respect to the temperature of the liquid, and enables liquid supply by means of feeding liquid to the cell box, thus replenishing the tank up to an operational level, when the liquid enters the cell box, it cools the temperature detector which disables the liquid feeding means, cutting off inflow of cold liquid to the cell box.

EP 1 026 306 B1 relates to an automatic refill steam generator for use in conjunction with steam cleaning equipment, clothes irons, fan-assisted ironing boards with refill function, coffee and similar brewing machines. The automatic refill steam generator is provided with at least an electric heating element attached to the outside of the steam generator and equipped with a control thermostat, said steam generator being connected on one side to a water reservoir via a pump and at least a pipe, and being further connected on the other side to the steam using apparatus via a pipe.

U. S. Patent 4,207,683 relates to a laundry dryer having a touch-up spray for removal of wrinkles from clothing and fabrics and permanent press clothing, in particular without removing possibly present factory set creases. The dryer may include a water heating unit for spraying water of a selected temperature or steam. The steam is applied to remove undesired wrinkles or odours from the laundry being treated and thus provides refreshment to the laundry. Accordingly, this dryer may be designated to be a "refresher dryer". It should be remarked that such nomination is not reserved to an appliance which is designed merely to dry laundry besides the refreshing function; instead, it will also be applied to a washer/dryer with a refreshing function.

It is an object of the present invention to provide an easy-to-assemble and yet accurate and reliable means for operating a steam generator in a laundry appliance.

The object is achieved according to the features specified in the independent claims. Preferred embodiments can be derived, inter alia, from the dependent claims and from the subsequent disclosure.

Accordingly, the object is achieved by a sensor for measuring a temperature of a heater of a steam generator in a laundry appliance. The sensor is a NTC sensor which is mounted on an outer surface of the heater.

The use of a NTC sensor provides a very accurate temperature measurement. A NTC sensor is also particularly rugged. By mounting the NTC sensor on an outer surface of the heater, assembly is very easy. It may be noted that, other than prior art practice which generally relies on measuring a temperature of the water to be evaporated, the invention relies on measuring a temperature of the heater body directly. This temperature is much less affected by evaporation effects which limit the measurable temperature to the evaporation temperature of the liquid to evaporate. Accordingly, the invention guarantees a significantly higher precision in determining a true thermal overload of the heater.

According to one preferred embodiment, the sensor comprises a NTC thermistor made of a temperature dependent semi-conducting ceramic material, e.g. a sintered metal oxide. The use of the semi-conducting ceramic material has the advantage that it is resistant to excess temperatures and has reproducible properties which allow using series-produced NTC thermistors for series production of sensors. Of course, other suitable NTC thermistor materials may be used.

According to another preferred embodiment, the NTC thermistor is encapsulated in glass. This ensures a good electrical insulation and protection against environmental influences like corrosion.

According to yet another preferred embodiment, the thermistor is connected to at least one wire, the wire being adapted to conduct sensor signals from the thermistor, wherein the at least one wire is at least partially covered by a protective sleeve made of one or more polyolefins. This ensures a heat-resistant and high electrical insulation of the wires. The protective sleeve may be heat-proof up to at least 200 °C, preferably up to at least 230 °C. This is well within the maximum temperature at the outer surface of most heaters in steam generators.

According to even another preferred embodiment, the at least one protective sleeve is in turn at least partially surrounded by a common protective sleeve made of a glass fiber material. The common protective sleeve is preferably heat resistant up to 200 °C, preferable up to at least 230 °C. The common protective sleeve provides a high wear resistance, e.g. against abrasion, of the wires and their respective protective sleeves.

According to a further preferred embodiment, a characteristic Beta value in a temperature range between 25 °C and 100 °C is between 3500 K and 4500 K, preferably between 3750 K and 4250 K, the advantage attained thereby being a good sensitivity for the present purpose and a high quality of the temperature measurement by using this sensor. The Beta value stems from the well-known Beta parameter equation which is essentially a Steinhart Hart equation with c=0.

According to a particularly preferred embodiment, a lifetime of the NTC sensor is in excess of 2000 work cycles, preferably in excess of 2500 work cycles. Selecting such lifetime provides a lifetime of the NTC sensor that is in line with or above some or most components critical to wear of a normal laundry dryer.

According to still another preferred embodiment, a lifetime of the NTC sensor is at least 10 years of operation of the laundry appliance. This provides a lifetime of the NTC sensor that is in line or above a usual lifetime of the dryer.

The object is also achieved by a steam generator that comprises at least one such sensor.

The sensor is preferably attached to an outside surface of the heater, in particular a top surface.

In the following sections, particularly preferred embodiments of the invention are described in greater detail, including references to the Figures of the attached drawing. In particular:
- Fig.1: shows an oblique view onto a laundry appliance comprising a steam generator;
- Fig.2: shows an oblique view onto the steam generator of the laundry appliance of Fig.1; and
- Fig.3: shows the steam generator of Fig.2 in a partly transparent view. Further,

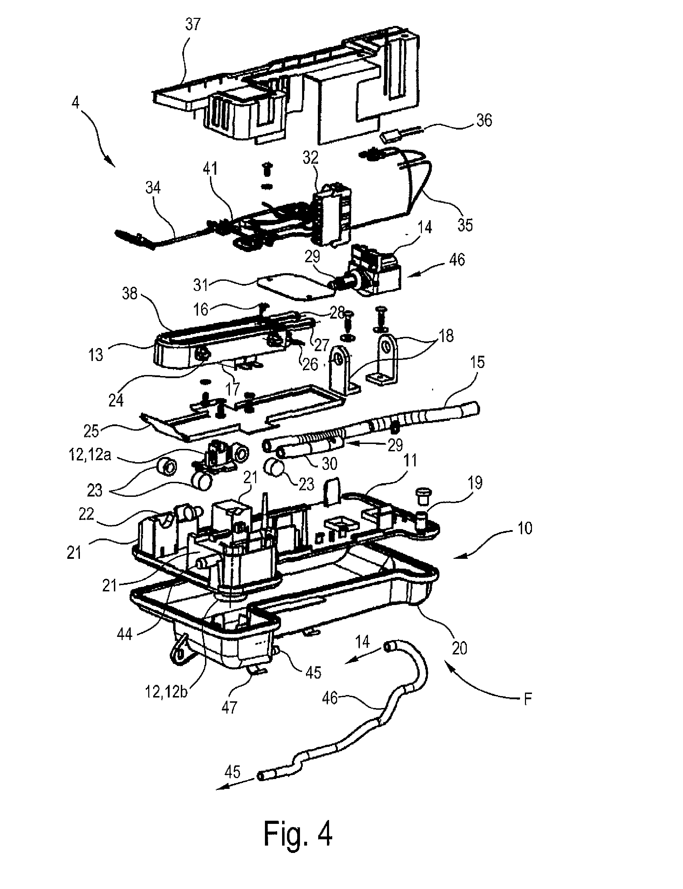

- Fig.4: shows an exploded view of the steam generator, and
- Fig.5: shows a top view of a NTC sensor of the steam generator.

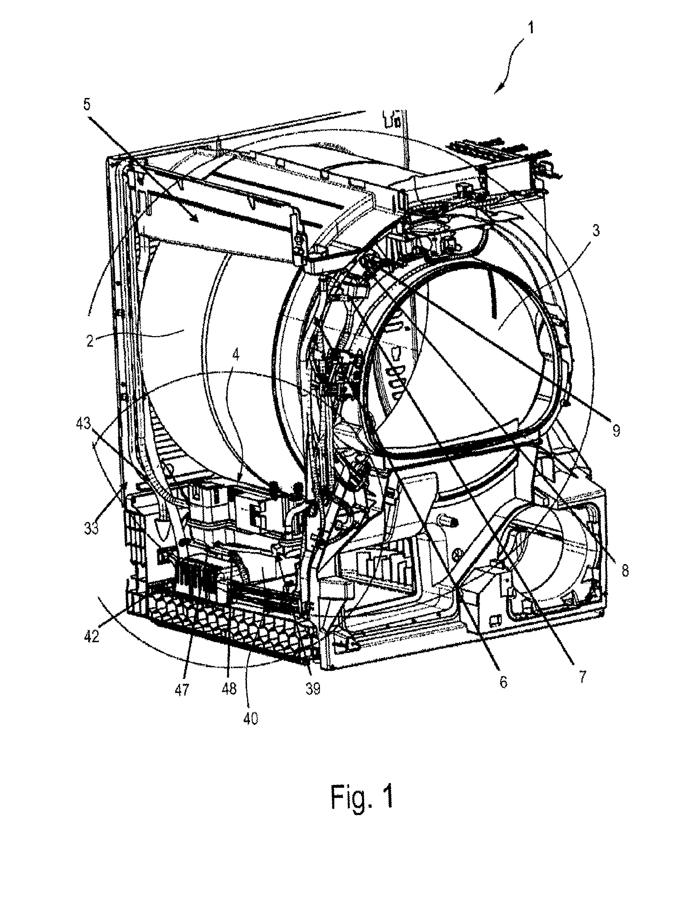

**Fig.1** shows a laundry appliance 1 that is a laundry dryer or a refresher-dryer which incorporates a laundry refreshing and de-wrinkling function by applying steam. The laundry appliance 1 is shown without housing. In particular, the laundry appliance 1 is embodied as a tumble dryer comprising a rotatable drum 2 which holds the laundry to be dried and which may be operated by being rotated in reversing rotational directions. The drum 2 can be loaded and unloaded through an opening 3. The opening 3 is typically closed by a door (not shown). The operation of a tumble dryer as such is well-known.

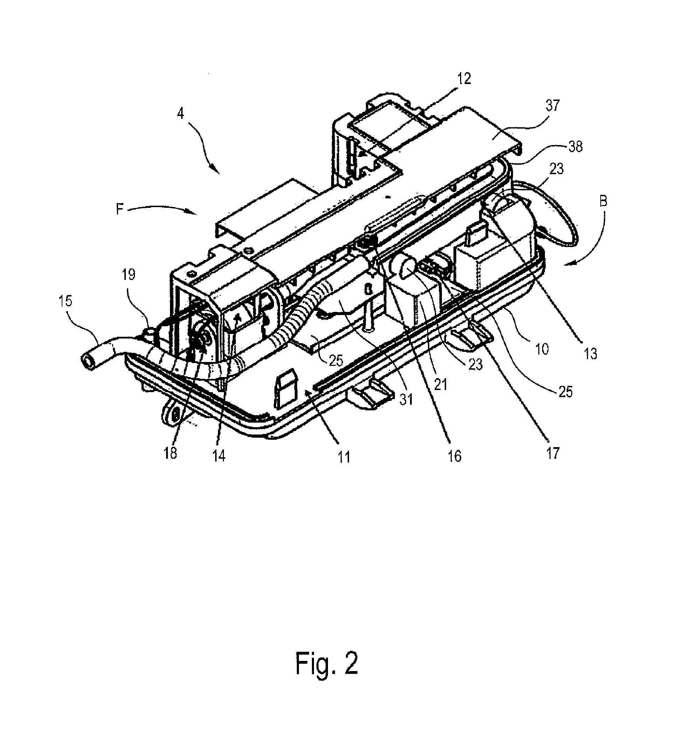

To implement the refreshing function, the laundry appliance 1 comprises a steam generator 4 which is located at a bottom of the laundry appliance 1 and mounted on top of a cover 39 of a heat exchanger 40 and of which a front side F (see also Fig.2) is visible. The steam generator 4 is used to generate steam from water. Water is supplied to the steam generator 4 via a condensate container shell 5 through a flexible filling hose 6. The water supplied to the steam generator 4 is thus the condensate that is extracted from the damp clothes during the drying process. The condensate container shell 5 may additionally be filled by fresh water, e.g. at the beginning of a drying cycle if there is not yet enough condensate to supply the steam generator 4.

The output generated by the steam generator 4 usually contains a mixture of steam and hot water and is led to a steam separator 7. The steam separator 7 separates the steam from the hot water. The steam is fed into the drum 2 via a hose 8 that leads to a nozzle 9. The nozzle 9 opens into the drum 2 and may inject the steam directly onto the clothes or laundry. The steam injection may comprise an injection of steam and /or a fine mist of water droplets. To this end, the nozzle 9 may have a shape, e.g. an angular shape, which allows orientation of the steam flow. The hot water is returned to a T-connector 42 located in a dryer pump reservoir via a flexible hot water return hose. Thus, the steam separator 7 ensures that only steam with a low or very low liquid content is fed into the drum 2.

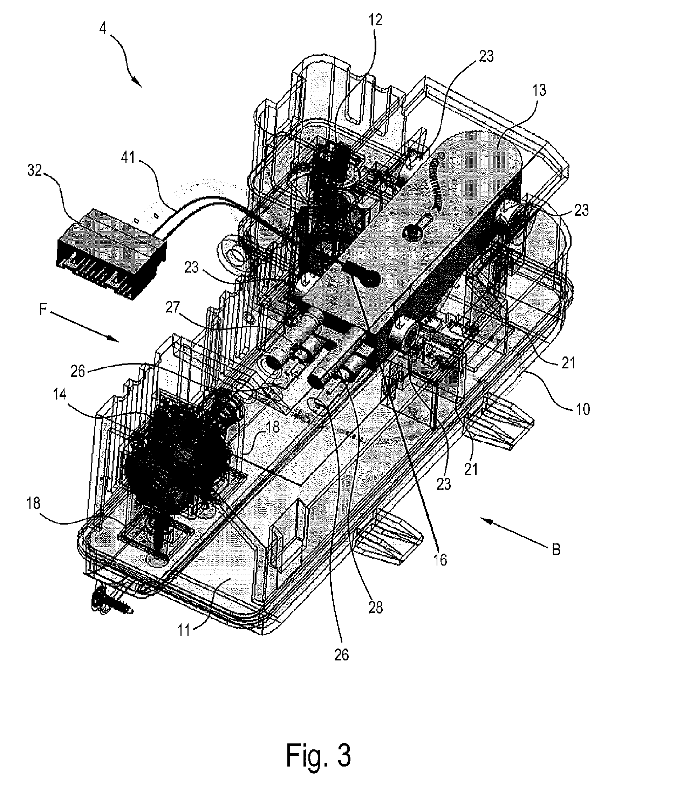

The steam generator 4 further comprises or is connected to a flexible de-aeration hose 43 that connects to a water tank (see fig.3 for further detail) of the steam generator 4. The steam generator 4 further comprises a siphon fixation 47 for holding or fixing a siphon 48.

**Fig. 2** and **Fig.3** show the steam generator 4 in greater detail by an elevated view onto a rear side B of the steam generator, with Fig.3 being a partly transparent view.

The rear side B of the steam generator 4 borders on the drum 2 and faces to the inside of the laundry appliance 1 of Fig.1. The front side F of the steam generator 4 is shown in Fig.1.

The steam generator 4 comprises a water tank 10 for a base that is covered by an upper part 11 of a tank body of the water tank 10. A water level of the water tank 10 is measured by a water level sensor 12 that is implemented as a combined reed water level sensor 12a and float water level sensor 12b. The water level sensor 12 is placed inside the water tank 10. The water tank 10 is filled with water via a water inlet 19 that is connected to the filling hose 6 as shown in Fig. 1. The water level sensor 12 may be used to control the function of the steam generator 4 as well as the function of drying components of the laundry appliance 1.

On top of the upper part 11 of the water tank 10 there is mounted a heater 13 to heat water and subsequently produce steam, usually mixed with the hot water. A heater body of the heater 13 may be made at least partially from aluminium. The heater 13 is supported on support columns 21. The support columns 21 each hold a respective silicone holder 23 laterally mounted to the heater 13. This holding or supporting arrangement of the heater 13 has the advantage that vibrations from or to the heater 13 are suppressed, and that a thermal flow from the heater 13 is at least partially blocked by the silicone holders 23. The heater 13 is not arranged horizontally but is angled to the horizontal in order to achieve an improved de-calcification.

The mixture of steam and hot water generated within the heater 13 is led out of the heater 13 and fed to the steam separator 7 by a steam outlet pipe 15 or hose. A temperature of the heater 13 is monitored by a NTC (negative temperature coefficient) sensor 16 that is mounted on top / on an upper part of the heater 13. The NTC sensor 16 may be regarded as part of the heater 13. Electrical terminals 26 of a heating element of the heater 13 are located at the same side as the water inlet and outlet.

The heater 13 also comprises or is connected to a safety switch 17 by which the heater 13 may be switched off to prevent overheating.

The water is supplied from the water tank 10 to the heater 13 by a water pump 14 which is implemented as a solenoid-driven vibration pump 14. The pump 14 is supported by a pair of screwed rubber holders 18. This reduces the propagation of vibration and thus reduces the overall noise of the steam generator 4. The suppression of the vibration propagation also enhances the life time of the steam generator 4.

**Fig. 3** shows an exploded view of the steam generator 4 viewing its front side F. The water tank 10 comprises a tank body 20, which is covered by the upper part 11. The upper part 11 comprises the water inlet 19 and a de-aeration outlet 44 for connection with the de-aeration hose 43. The tank body comprises a water outlet 45 that can be connected to a water inlet of the water pump 14 via a water pipe 46. At a bottom of the tank body 20 is placed a metal insert 25 that acts as a barrier against fire in case of a melting of the heater 13. The bottom of the tank body 20 also holds the siphon fixation 47.

The upper surface of the water tank 10 further comprises the support columns 21 for supporting the heater 13. The support columns 21 each comprise an upper recess 22 for supporting the respective silicone holder 23. Each silicone holder 23 is in turn laterally mounted to the heater 13, in particular fitted onto a respective mounting column 24. This holding arrangement of the heater 13 has the advantage that vibrations from or to the heater 13 are suppressed and that a thermal flow from the heater 13 is at least partially blocked by the silicone holders 23.

Water is supplied into the heater 13 via a water inlet connection 27 and guided within the heater 13 by a water tube 38, to leave the heater 13 as a mixture of hot water and steam by a steam outlet connection 28. The water tube 38 can be heated up by a heating element or heating elements (not visible) of the heater 13. The water tube 38 is located on a top surface of the heater 13. The water inlet connection 27 is connected to a pressure outlet 29 of the pump 14 by a connection hose 30. The water inlet connection 27 and the pressure outlet 29 are aligned horizontally and facing each other; this ensures a direct / linear connection that acts against a possible pressure drop at the heater 13 and that also prevents the hose 30 from coming off. The steam outlet connection 28 is connected to the steam outlet pipe 15. The heater 13 is angled relative to the horizontal with the end comprising the connections 27, 28 being placed lower than the opposite end in order to achieve an improved de-calcification.

Between the upper part 11 of the water tank 10 and the heater 13 there is inserted metal insert 25 with soft edges, e.g. round edges. The soft edges prevent damage to electrical connections, e.g. damage to an insulation of an electrical cable. The heater 13 is grounded electrically via the metal insert 25 and from the metal insert 25 further to a dryer frame 33 shown in Fig.1. The metal insert 25 may act as a barrier against fire in case of a melting of the heater 13.

At the bottom of the heater 13 is located the safety switch 17. The safety switch 17 uses a duo pack comprising a bimetal element and a fuse to prevent overheating of the heater 13. In case that the safety switch 17 detects an overheating condition, it switches off the heater 13. In case that the safety switch 17 detects an overheating condition, it switches off the heater 13. Threshold temperatures where a switching action will occur are presently set at 190°C for the bi-metal element which is reversible, and 260°C for the fuse which is irreversible. Thereby, the safety switch 17 will turn off heater 13 reversibly in case of a minor malfunction which produces a temperature rise of minor criticality, and it will turn off heater 13 irreversibly (that is, irreversibly except by action of a skilled service technician) upon a temperature rise of major criticality. It is understood that problems of less criticality include problems caused by temporary clogs of and water bubbles in the water hoses leading to heater 13 which may be expected to disappear by themselves and do not require attention by a skilled service technician. Accordingly, it is understood to be a sufficient measure to interrupt the action of the heater 13 only reversibly upon encountering such problems. The safety switch 17 may be located near the heating element(s), or the heating element(s) may at least partially be inserted into the safety switch 17.

The steam outlet pipe 15 and the connection hose 30 are placed above and may be bearing on a micanite safety insert 31. The safety insert 31 provides a leakage protection. Furthermore, the safety insert 31 prevents electrical connections from getting in contact with water that may be leaking or condensing at the or between the water pump 14 and the heater 13. The use of micanite or mica provides for a high dielectric strength, excellent chemical stability, and high resistance to excess heat. Also, the plate-like micanite safety insert 31 is light-transmissive such that is does not inhibit view onto elements located below it.

The steam generator 4 further comprises a single connection housing 32 for all electrical connections / internal wiring 41. The connection housing 32 may be produced, e.g. by AMP Inc. All electrical connections lead into the connection housing 32. The electrical connections / internal wiring 41 include an earth connection line 34 and an electrical connection 35 connected to a temperature protector 36 of the pump 14. The temperature protector 36 is mounted on the water pump 14. The connection housing 32 may be connected to the steam generator 4 by clamping.

The steam generator 4 is in large parts covered by a plastic cover 37. The plastic cover 37 can be clamped onto the tank 10 without the need for screws or other additional fixing elements to provide easy assembly. The plastic cover 37 can be made of a flame retardant material, like a V0 material, to ensure standards for safety regulations.

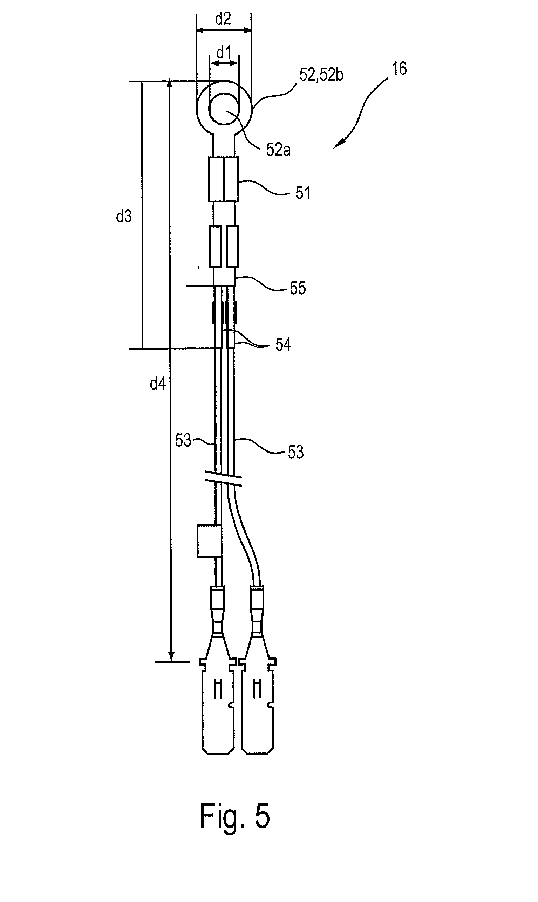

**Fig.5** shows the NTC sensor 16 in greater detail. The NTC sensor 16 comprises a NTC thermistor 51 of a temperature-dependent semi-conducting ceramic material known as such. The semiconductor material is encapsulated in glass, and the element thus formed is contained in a housing 52 made from silvered brass and extending from the lug 52b over the thermistor 51. The temperature-dependent semi-conductor material has a resistance value which decreases with rising temperature. The ceramic material may be a sintered ceramic material, e.g. a sintered polycristalline titanate or a sintered ceramic material for highly stable thermistors based on NiₓMn_{3-z}O4 with x = 0,84 to 1, and 0 < z < 1,6. The Beta value is about 4000 K.

To mechanically and thermally connect the thermistor 51 to the surface of the heater 13, the NTC sensor 16 further comprises metal housing 52 made of brass, and silvered, having a thickness of about 0,5 mm. Housing 52 includes a lug 52a with a screw-hole 52b for screwing the thermistor 51 to the heater 13. The use of brass as a relatively malleable material ensures a good contact between the metal housing 52 and the heater 13. Also, brass is a good thermal conductor and relatively resistant to corrosion. The screw-hole 52a of the housing 52 has a diameter d1 of about 4 mm while the lug 52b has a diameter d2 of about 8 mm. The screw-hole 52a might, for example, accommodate an M3 screw for screwing the housing 52 to the heater 13 and the aluminum heater body, respectively.

The thermistor 51 is connected to a pair of wires 53 to conduct sensor signals from the thermistor 51. The wires 53 are each implemented as AWG22 wires which are insulated by FEP (polymerized fluorinated ethylene/propylene) or PTFE (polytetrafluoroethylene, also known under the brand name Teflon), and which are heat-resistant up to at least 200 °C, preferable up to 230 °C. In particular, PTFE is highly-temperature resistant, friction-resistant and wear-resistant as well as very inert, e.g. against corrosion.

The wires 53 are in turn each at least partially covered by a protective sleeve 54 for electrical insulation made of black polyolefin which is heat proof up to at least 200 °C, preferable up to at least 230 °C. The protective sleeve 54 ends after a distance d3 of about 60 mm from a head 52b of the housing 52. For example, neither water and water-containing substances nor oil and oil-containing substances are wet by PTFE.

The protected wires 53, 54 are in turn at least partially surrounded by a common protective sleeve 55 made of a white silicone-impregnated glass fiber material. The common protective sleeve 55 is preferably heat resistant up to 200 °C, more preferably up to at least 230 °C. The common protective sleeve 55 provides a high wear resistance, e.g. against abrasion. The common protective sleeve 55 may extend over the whole length or part of the length of the protected wires 53, 54.

Thus, the NTC sensor 16 can endure temperatures up to at least 200 °C, preferably up to at least 230 °C, in a high-temperature zone extending about d3 = 60 mm around the housing 52. In other words, within the distance d3 (which corresponds to a length of a 'high temperature part' of the NTC sensor 16), the NTC sensor 16 may touch the heater 13 (a surface of which might reach but not exceed the temperature maximally endurable by the high temperature part of the NTC sensor 16) without risk of damage. The distance d3 / the length of the high temperature part of the NTC sensor 16 at least exceeds the width of the heater 13 such that the NTC sensor 16 is protected from the heater 13 at least if the wires 53 are directed or arranged sideways.

Generally, the operational temperature range of the NTC sensor 16 is between -10 °C and at least 200 °C, preferably 230 °C. The operation of the NTC sensor 16 at its maximum operation temperature of 200 °C, preferably 230 °C, is sustainable for at least 250 hours.

Outside of the high-temperature zone (away from the heater 13), the NTC sensor 16 sustains working temperatures of up to 90 °C.

At the end opposite of the housing 52, each of the wires 53 ends in a crimped connector 56 of tin plated brass, having a tab of a dimension 6.3 mm x 0.8 mm with an insulation support. The connectors 56 are stable over at least a temperature range of -10 °C up to at least 220 °C. A wires-pull-off force which represents the minimum force required to pull at the wires 53 from a housing of the heater 13 in an axial direction without damage, malfunction or loosening of contacts is not less than 20 N. A tear-off-force which represents the minimum force required to pull at the connector(s) 56 from the connection housing 32 in an axial direction without damage, malfunction or loosening of contacts is not less than 50 N. The overall length of the NTC sensor 16 from its head 52b to its connectors 56 is between 150 mm and 200 mm.

The NTC sensor 16 has a characteristic tolerance of less than 3% and a resistance value R_{N} of 3300 Ohm at a nominal temperature of T_{N} = 100 °C. The resistance value at 25 °C is about 50 MOhm. The characteristic Beta value (25/100) of the well known R/T curve is preferably around 4000 K.

A response time (measured according to a 63% method, with water at 25 °C or at 85 °C) is below 3 s. The maximum power consumption at 25 °C is around 10 mW. A drift during a lifetime of the NTC sensor 16 at 150 °C is lower than 8 %. A dissipation factor of the thermistor 51 in air is in the range of 2 to 4 mW/K.

An insulation resistance Riso at U=500V DC with the NTC sensor 16 immersed is larger than 100 MOhms, so that this insulation resistance is also holding between electrical connections and housing 52.

The NTC sensor 16 is further voltage proof in the sense that if a voltage of 1000 V AC at 50 Hz that is applied for 1 sec, no flashover occurs.

All materials that are in use for the NTC sensor 16 behave chemically inert among each other. All metal parts of the NTC sensor 16 are protected against corrosion or of a substantially corrosion-proof material (e.g. silver plated or tinned connectors 56 and/or a tinned or brazed housing 52 etc.)

A lifetime of the NTC 16 sensor is in excess of 2000 work cycles, preferably at least 2500 work cycles, of at least 6 minutes each. A work cycle is presumed to include heating from ambient temperature (e.g. 25 °C) to 170 °C in 30 seconds by operating the heater 13, then staying at 170 °C for 6 minutes, followed by turning off the heater 13 and free cooling. The shown NTC sensor 16 sustains more than 2500 work cycles during 10 years of operation.

Of course, the invention is not limited to the embodiments shown.

For example, the housing of the NTC sensor may be made from aluminium or copper instead of brass. Also, the length of the high-temperature zone of the NTC sensor 16 may be less or more than 60 mm. Furthermore, the maximum operational temperature of the NTC sensor 16 may be lower or higher than 230 °C, e.g. depending on the heater specifications.

### List of Reference Numerals

- 1: laundry appliance
- 2: drum
- 3: opening
- 4: steam generator
- 5: condensate container shell
- 6: filling hose
- 7: steam separator
- 8: hose
- 9: nozzle
- 10: water tank
- 11: upper part of tank body
- 12: water level sensor
- 13: heater
- 14: water pump
- 15: steam outlet pipe
- 16: NTC sensor
- 17: safety switch
- 18: rubber holders
- 19: water inlet
- 20: tank body
- 21: support columns
- 22: upper recess
- 23: silicone holders
- 24: mounting column
- 25: metal insert
- 26: electrical terminals
- 27: water inlet connection
- 28: steam outlet connection
- 29: pressure outlet
- 30: connection hose
- 31: safety insert
- 32: connection housing
- 33: dryer frame
- 34: earth connection line
- 35: electrical connection
- 36: temperature protector
- 37: plastic cover
- 38: water tube
- 39: cover
- 40: heat exchanger
- 41: internal wiring
- 42: T-connector
- 43: de-aeration hose
- 44: de-aeration outlet
- 45: water outlet
- 46: water pipe
- 47: siphon fixation
- 48: siphon
- 51: thermistor
- 52: housing
- 52a: screw-hole circle
- 52: head of the housing
- 53: wire
- 54: protective sleeve
- 55: protective sleeve
- 56: crimped connector

## Claims

1. A sensor (16) for measuring a temperature of a heater (13) of a steam generator (4) in a laundry appliance (1), **characterized in that** the sensor (16) is a NTC sensor (16) which is mounted on an outer surface of the heater (13).

2. The sensor (16) according to claim 1, **characterized in that** the sensor (16) comprises a NTC thermistor (51) made with a temperature dependent semi-conducting ceramic material.

3. The sensor (16) according to claim 2, **characterized in that** the NTC thermistor (51) is glass encapsulated.

4. The sensor (16) according to any of the claims 2 or 3, **characterized in that** the thermistor (51) is connected to at least one wire (53), the wire (53) adapted to conduct sensor signals from the thermistor (51), wherein the at least one wire (53) is at least partially covered by a protective sleeve (54) made of one or more polyolefins.

5. The sensor (16) according to claim 4, **characterized in that** the at least one protective sleeve (54) is in turn at least partially surrounded by a common protective sleeve (55) made of a glass fiber material.

6. The sensor (16) according to any of the preceding claims, **characterized in that** the characteristic Beta value in a temperature range between 25 °C and 100 °C is between 3500 K and 4500 K.

7. The sensor (16) according to any of the preceding claims, **characterized in that** a lifetime of the NTC sensor (16) is in excess of 2000 work cycles, preferably in excess of 2500 work cycles.

8. The sensor (16) according to any of the preceding claims, **characterized in that** a lifetime of the NTC sensor (16) is at least 10 years of operation of the laundry appliance (1).

9. A steam generator (4) comprising a heater (13), **characterized in that** the steam generator (4) comprises at least one sensor (16) according to any of the preceding claims.
